# FASCICULE DE BREVET EUROPEEN

(11) **EP 1 493 663 B1**
(45) Date de publication et mention de la délivrance du brevet: **28.12.2005**
(21) Numéro de dépôt: 04291603.1
(22) Date de dépôt: 25.06.2004
(51) Int. Cl.: B64D 27/26

(54) **Suspension arrière de moteur d'avion avec bielles de reprise de poussée et palonnier en forme de boomerang**
Vorrichtung für die Hinteraufhängung eines Flugzeugtriebwerkes mit Verbindungsstangen und Hebel mit Bumerangform
Rear suspension device for an aircraft engine with thrust links and lever in shape of boomerang

(30) Priorité: 30.06.2003 FR 0307893
(43) Date de publication de la demande: 05.01.2005
(73) Titulaire: SNECMA, 75015 Paris (FR)
(72) Inventeur: Loewenstein, Philippe, 76490 Saint Arnoult Le Bourg (FR); Darcy, Frédéric Jean-Marc, 77000 Vaux Le Penil (FR); Tesniere, Marc, 91750 Champcueil (FR)
(74) Mandataire: David, Daniel

(56) Documents cités:
- EP-A- 1 136 355
- EP-B- 0 564 126
- EP-B- 0 879 759

## Description

La présente invention concerne la suspension des moteurs de propulsion à la structure d'un avion. Elle concerne en particulier une suspension arrière avec reprise de poussée comprenant des moyens visant à maintenir la suspension en fonction en cas de rupture de l'une de ses pièces.

Un moteur de propulsion peut être monté à divers endroits de l'avion en étant accroché à un mât appartenant à la structure de ce dernier. Il peut être suspendu sous les ailes, fixé au fuselage ou monté dans l'empennage par des moyens d'accrochage. Ces moyens d'accrochage ont pour fonction d'assurer la transmission des efforts mécaniques entre le moteur et la structure de l'avion. Les charges à prendre en considération sont orientées selon les trois directions principales. Ce sont notamment le poids du moteur, sa poussée, et les charges aérodynamiques latérales. Les charges à transmettre comprennent aussi la reprise du couple de rotation autour de l'axe du moteur. Ces moyens doivent en outre absorber les déformations subies par le moteur pendant les différentes phases du vol en raison notamment des variations dimensionnelles dues aux dilatations ou contractions thermiques

Un mode de suspension, par exemple, dans le cas d'un turbomoteur à soufflante, consiste à accrocher le moteur à un mât appartenant à la structure de l'aile de l'avion par une suspension ou attache avant et une suspension ou attache arrière. La suspension avant est fixée en particulier sur le carter extérieur de la soufflante et la suspension arrière au carter d'échappement du flux primaire.

Selon une configuration connue, l'attache avant est agencée pour assurer la transmission des efforts mécaniques verticaux et latéraux entre le moteur et l'avion. L'attache arrière est agencée pour assurer le passage des efforts mécaniques suivant ces mêmes directions, ainsi que la reprise du couple moteur autour de l'axe du turbomoteur et la reprise de poussée. Cette dernière est transmise par l'intermédiaire de deux barres de reprise de poussée accrochées, à l'avant, à la base du carter de soufflante de part et d'autre de l'axe longitudinal, et, à l'arrière, au moyen de suspension arrière du moteur.

La présente invention concerne la suspension arrière avec les moyens de reprise de poussée.

Comme cela est connu, une telle suspension comprend plus précisément une ferrure que l'on fixe à un élément structurel de l'avion, désigné mât, les deux barres ou bielles de reprise de poussée reliées à la ferrure par un palonnier, ainsi qu'un jeu de bielles articulées sur le carter d'échappement du flux primaire. Afin de palier les problèmes survenant en cas de rupture d'une pièce, telle que l'une des bielles ou bien le palonnier, assurant la transmission des efforts de poussée entre le moteur et la structure de l'avion, la suspension est toujours pourvue de moyens de sécurité qui visent à se substituer à la pièce défaillante.

La demande de brevet EP 1136355 décrit un dispositif de reprise de poussée avec des moyens formant une liaison avec jeu entre chacune des bielles et la ferrure. Ces moyens assurent la transmission des efforts de poussée en cas de rupture de l'une des pièces du dispositif. La ferrure comprend, sur l'avant, une chape centrale sur laquelle le palonnier est articulé. Les deux bielles sont articulées par des premiers axes de pivotement aux deux extrémités du palonnier. La ferrure comprend comme moyen de sécurité deux oreilles ou pattes latérales supplémentaires, de part et d'autre de la chape centrale. Ces pattes reçoivent les moyens de liaison avec jeu de chacune des bielles de poussée. Les liaisons avec jeu sont constituées chacune d'un axe de pivotement, parallèle au premier axe, traversant à la fois la patte latérale et la chape de la bielle correspondante. L'axe de pivotement est monté avec jeu sur la patte de fixation de la ferrure. En fonctionnement normal les efforts sont transmis par les bielles, le palonnier, la chape centrale de la ferrure, et la ferrure elle-même. En cas de rupture de l'une des bielles par exemple, un déplacement relatif survient qui entraîne l'absorption du jeu de l'autre bielle. La liaison devient rigide et assure la transmission des efforts.

Ce dispositif remplit parfaitement la fonction de sécurité qui lui a été dévolue.

On a proposé d'autres agencements permettant d'assurer la transmission des efforts en cas de rupture accidentelle de l'une des pièces constituant le dispositif de reprise de poussée.

Les brevets EP 564126, EP 879759 ou EP 805108 décrivent également de tels dispositifs avec emploi d'un palonnier reliant les deux bielles à la ferrure arrière par l'intermédiaire d'une articulation centrale. Cette dernière comprend un axe de pivotement orienté radialement par rapport à l'axe longitudinal du moteur. L'axe de pivotement traverse le palonnier et une chape centrale double solidaire de la ferrure. Ces brevets présentent divers moyens pour assurer la transmission de la poussée en cas de fonctionnement anormal.

La demanderesse s'est fixé comme objectif d'améliorer les dispositifs de l'art antérieur tant sur le plan mécanique que sur celui des coûts de fabrication.

Conformément à l'invention, la suspension de turbomoteur à un mât d'avion comprenant une ferrure agencée pour être fixée au mât, un palonnier fixé dans sa partie centrale à la ferrure par un premier moyen de liaison avec un axe de pivotement et deux bielles de reprise de poussée reliées chacune à l'arrière au palonnier par un deuxième moyen de liaison et comprenant à l'extrémité avant des moyens de fixation au moteur, le palonnier comportant deux troisièmes moyens de liaison latéraux en attente, avec la ferrure, caractérisé par le fait que le premier moyen de liaison est constitué de deux branches parallèles distantes l'une de l'autre sur la partie centrale du palonnier, coopérant avec une patte de fixation solidaire de la ferrure par l'intermédiaire d'un axe de pivotement.

L'invention présente l'avantage d'améliorer la sécurité en cas de rupture d'une pièce en doublant les chemins d'efforts sur le palonnier entre les bielles et la ferrure. Si une fissure survient sur l'une des branches de la partie centrale du palonnier les efforts sont transmis par l'autre branche.

Conformément à un premier mode de réalisation, le palonnier comporte, de part et d'autre de sa partie centrale, une patte de fixation latérale pour supporter les deuxièmes et troisièmes moyens de liaison.

Conformément à un second mode de réalisation, le palonnier comporte, de part et d'autre de sa partie centrale, une chape pour supporter les deuxièmes et troisièmes moyens de liaison.

Cette dernière solution présente l'avantage particulier de permettre l'usinage, sur la face avant de la ferrure, d'une seule pièce monoplan constituant les pattes de fixation pour le premier et les troisièmes moyens de liaison entre le palonnier et la ferrure. Le contour de la ferrure en est plus simple rendant son usinage plus aisé et plus économique. On diminue aussi les concentrations des contraintes.

D'autres caractéristiques et avantages apparaîtront à la lecture de la description qui suit accompagnée des dessins en annexe sur lesquels
La figure 1 représente une vue générale du montage d'un moteur au mât d'une aile d'avion.
La figure 2 représente la suspension arrière conforme à l'invention selon un premier mode de réalisation.
La figure 3 est une vue en coupe selon la direction III-III de la figure 2,
La figure 4 représente la suspension arrière conforme à l'invention selon un second mode de réalisation.
La figure 5 est une vue en coupe selon la direction V-V de la figure 4.

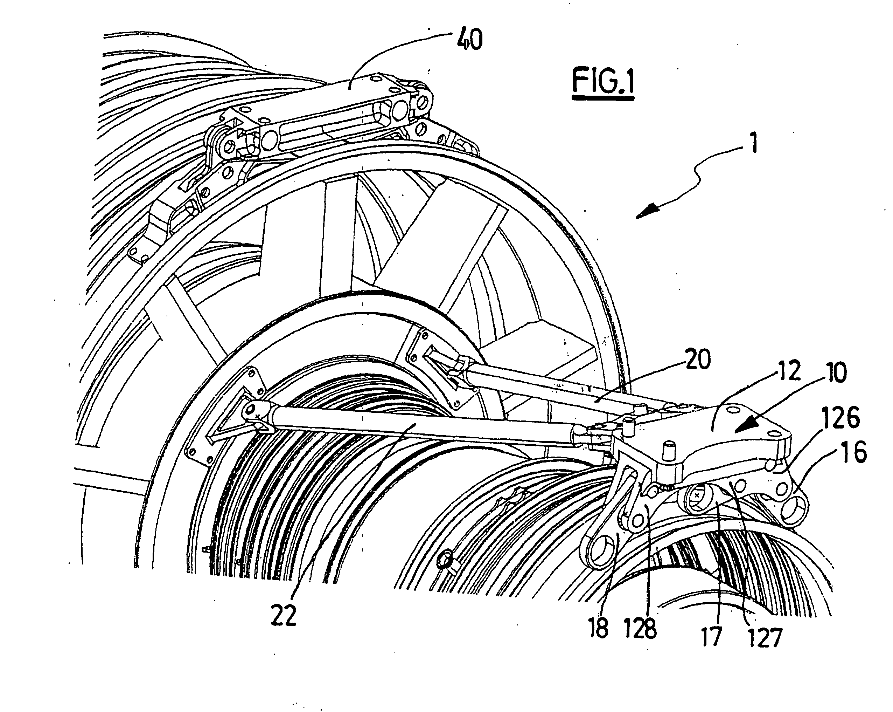

La figure 1 représente vu de trois-quarts arrière un turboréacteur 1 équipé de ses moyens d'accrochage à un mât d'avion qui n'est pas représenté. Il peut s'agir notamment de l'accrochage à l'aile d'un avion. Selon ce mode de suspension, le moteur comprend un dispositif d'attache 40 à l'avant du moteur, fixé sur le carter extérieur de la soufflante. Il comporte aussi un moyen d'attache 10 à l'arrière, fixé au carter d'échappement du flux primaire. La reprise de la poussée est assurée par deux barres 20 et 22 disposées longitudinalement de part et d'autre de l'axe du moteur et accrochées à leurs extrémités, d'une part à la base du carter de la soufflante et à l'attache arrière d'autre part.

La présente invention concerne l'attache arrière. L'attache 10 est composée d'une ferrure 12 supérieure, et de trois bielles 16, 17 et 18 reliant la ferrure 12 à des oreilles ou chapes solidaires du carter d'échappement, non représentés. Avantageusement ces oreilles sont les composantes d'une ferrure inférieure unique.

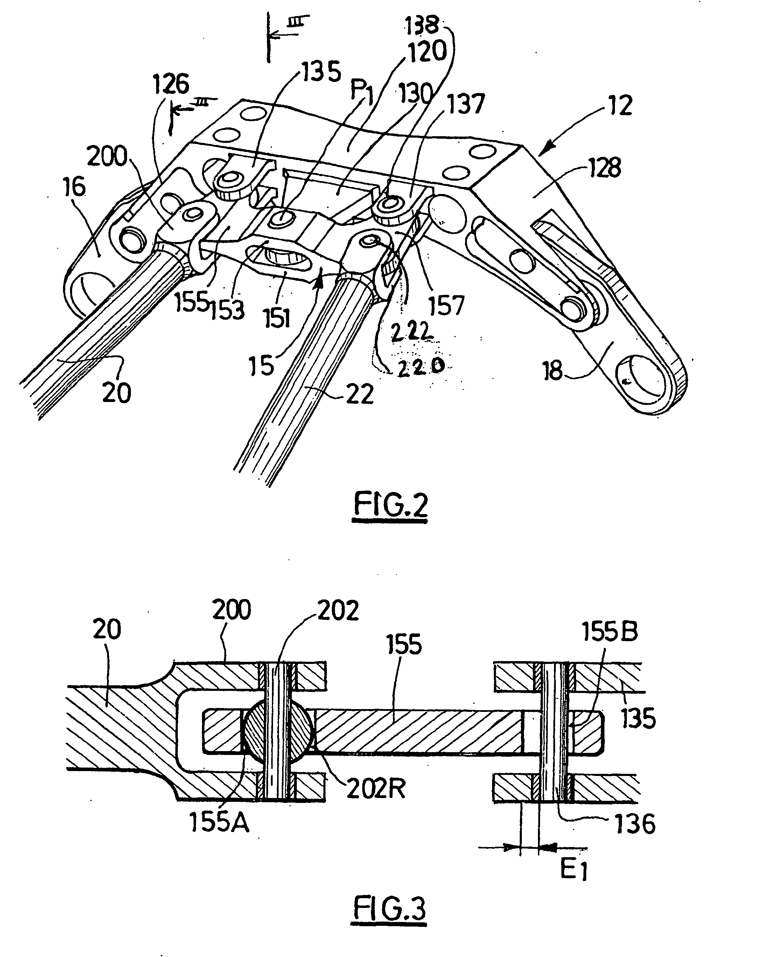

On décrit en référence aux figures 2 et 3 un premier mode de réalisation de l'invention.

La ferrure supérieure est constituée d'une poutre 120 avec, ici quatre logements pour le passage de boulons ou de vis avec lesquels on rend la ferrure solidaire du mât de l'avion. La poutre 120 est de forme sensiblement rectangulaire. Elle est disposée en sens travers par rapport à l'axe longitudinal du moteur. La poutre se prolonge de part et d'autre dans le sens transversal par deux chapes, 126 et 128, avec des moyens de liaison articulés aux bielles 16 et 18 respectivement. Les deux bielles 16 et 18 sont disposées en trapèze de part et d'autre du plan vertical passant par l'axe du moteur. Elles assurent la transmission des efforts verticaux et tangentiels. Une troisième chape 127, entre les deux premières, supporte la troisième bielle 17 pour la reprise du couple moteur.

La ferrure 12 comprend à l'avant, l'avant étant défini par rapport à la direction de la poussée du moteur, une patte de fixation 130 au palonnier 15. Le palonnier 15 est lui-même relié par ses extrémités latérales à deux barres de reprise de poussée 20 et 22 qui s'étendent vers l'avant du moteur.

Le palonnier comprend une partie centrale 150 avec deux branches parallèles entre elles 151 et 153. L'espace ménagée entre les deux branches reçoit la patte de fixation 130. Les deux branches 151, 153 et la patte 130 sont traversées par un axe de pivotement pour former le premier moyen de liaison. L'axe de pivotement P1 est ainsi orienté dans un plan passant par l'axe du moteur. De part et d'autre de la partie centrale 150, le palonnier comprend deux pattes de fixation latérales 155 et 157 planes. La patte 155 comprend un deuxième moyen de liaison 155-200 avec l'extrémité arrière de la bielle 20. Ce second moyen de liaison est constitué d'une chape 200 solidaire de la bielle et d'un axe de pivotement 202 coopérant avec un alésage 155A usiné dans la patte de fixation. L'axe de pivotement 202 est monté par l'intermédiaire d'une douille à rotule 202R dans l'alésage 155A, comme on le voit sur la figure 3 représentant une coupe de la patte de fixation.

La patte 155 comprend un troisième moyen de liaison 155-135, dans l'alignement de la bielle 20, avec la ferrure 12. Ce troisième moyen de liaison est constitué d'une chape 135 solidaire de la ferrure et d'un axe de pivotement 136 traversant les deux branches de la chape et un alésage 155B. L'axe 136 est monté avec un jeu E1 dans l'alésage 155B.

Comme la patte 155, la patte de fixation 157 forme un deuxième moyen de liaison 157-202 avec la bielle 22 et un troisième moyen de liaison 157-137 avec une chape solidaire de la ferrure 12. L'axe de pivotement 222 traverse les deux branches de la chape solidaire de l'extrémité de la bielle 22 et un alésage 157A de la patte 157. Une rotule 222R entre l'axe 222 et l'alésage assure la transmission des efforts dans l'axe de la bielle 22. Le troisième moyen de liaison est formé de la chape 137 sur la ferrure, et d'un axe de pivotement 138 en traversant les branches et un alésage 157B pratiqué dans la patte 157. Comme l'axe 136, l'axe 138 est monté avec un jeu radial E2 dans la patte 155. De préférence les jeux E1 et E2 sont égaux.

Avantageusement les alésages 155A et 155B sont alignés avec la direction de la bielle 20. Il en est de même des alésages 157A et 157B avec la bielle 22.

Comme on le voit sur les figures, le palonnier a une forme générale en boomerang.

On décrit maintenant le fonctionnement de la liaison entre les bielles et la ferrure.

Lorsque les pièces sont intactes, en fonctionnement normal, les efforts appliqués sur les bielles sont transmis au palonnier puis par la première liaison à la ferrure elle-même solidaire du mât. Les liaisons avec une articulation à rotule permettent de filtrer les efforts qui ne sont dans la direction des bielles. En outre les troisièmes liaisons sont en attente. Cela signifie que ces liaisons ne transmettent aucun effort en fonctionnement normal. Les jeux E1 et E2 sont déterminés de telle sorte que, quelles que soient les phases du vol de l'avion, aucune charge n'est transmise par ces liaisons.

Lorsque survient la rupture d'une bielle par exemple, le palonnier pivote autour de la première liaison jusqu'à ce que le jeu de la troisième liaison de l'autre bielle soit absorbé. La transmission des efforts s'effectue alors par cette troisième liaison.

On décrit maintenant un second mode de réalisation. Par rapport au premier mode de réalisation, les éléments correspondants portent les mêmes références avec prime.

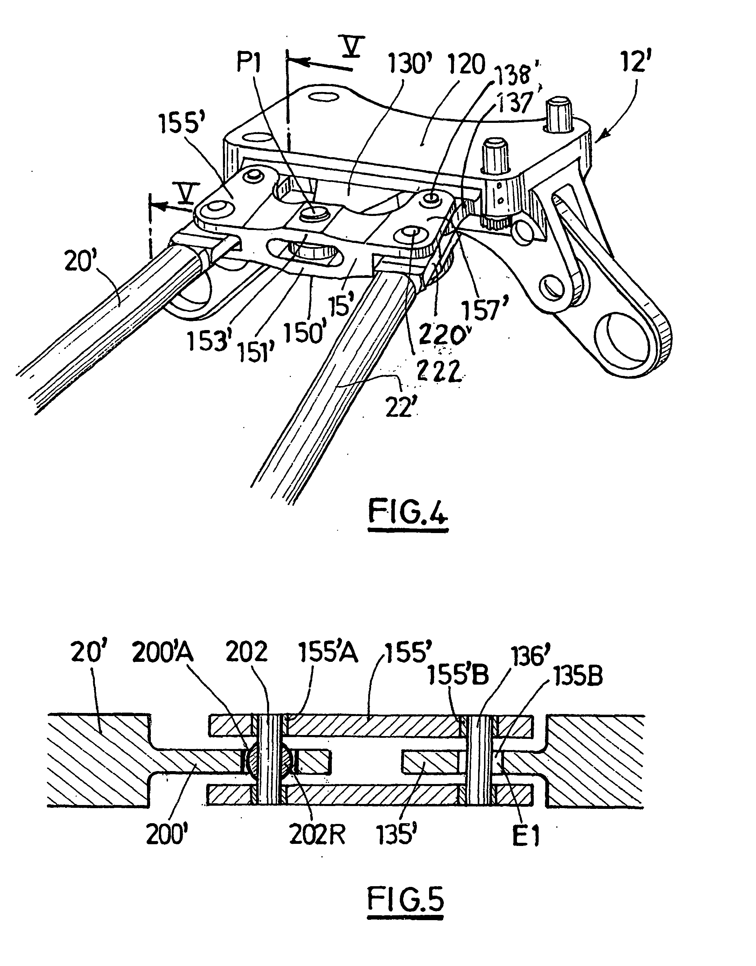

Sur la figure 4 on a représenté comme précédemment une suspension arrière avec une ferrure 12'. Un palonnier 15' est relié par un premier moyen de liaison 150'-130' à une patte de fixation 130' solidaire de la ferrure. Le palonnier comprend dans sa partie centrale 150' deux branches 151' et 153' formant un bi-plan entre lesquelles la patte est articulée par un axe de pivotement P1. De part et d'autre de cette partie centrale bi-plan, le palonnier comprend deux chapes latérales 155' et 157'. On a représenté sur la figure 5, une coupe selon la direction V-V de la figure 4. La chape 155' est reliée par un deuxième moyen de liaison 155'-200' à une patte de fixation 200' solidaire de l'extrémité arrière de la bielle 20'. Un axe de pivotement 202 traverse la chape 155' percée des alésages 155'A et la patte 200' percée d'un alésage 200'A. Une douille à rotule entre l'axe 202 et l'alésage 200'A permet la transmission des seuls efforts dirigés selon l'axe de la bielle. La chape 155' comprend un troisième moyen de liaison 155'-135' avec une patte de fixation 135' solidaire de la ferrure 12. Un axe de pivotement 136' traverse les alésages 155'B de la chape et l'alésage 135'B de la patte 135'. Conformément à une caractéristique de l'invention, l'axe 136' est monté avec jeu E1 dans l'alésage 135'.

Le fonctionnement de ce mode de réalisation est le même que le précédent. En fonctionnement normal, les efforts transitent par le premier moyen de liaison et les seconds moyens de liaison. Si une pièce vient à rompre, le jeu correspondant est réduit et les efforts transitent par le troisième moyen de liaison.

## Revendications

1. Suspension de turbomoteur à un mât d'avion comprenant une ferrure (12) agencée pour être fixée au mât, un palonnier (15 ; 15') fixé dans sa partie centrale (150; 150') à la ferrure par un premier moyen de liaison (150-130) avec un axe de pivotement (136; 136') et deux bielles (20, 22; 20', 22') de reprise de poussée reliées chacune à l'arrière au palonnier par un deuxième moyen de liaison (200-155, 220-157; 200'-155' ; 220'-157') et comprenant à l'extrémité avant des moyens de fixation au moteur, le palonnier (15, 15') comportant deux troisièmes moyens de liaison latéraux en attente (155-135, 157-137; 155'-135', 157'-137'), avec la ferrure (12; 12'), **caractérisé par le fait que** le premier moyen de liaison (150-130) est constitué de deux branches parallèles (151, 153) distantes l'une de l'autre sur la partie centrale (150) du palonnier, coopérant avec une patte de fixation (130) solidaire de la ferrure par l'intermédiaire d'un axe de pivotement.

2. Suspension selon la revendication 1 dont le palonnier (15) comporte de part et d'autre du premier moyen de liaison; une patte latérale (155, 157) pour supporter, vers l'avant, le dit second moyen de liaison (155-200, 157-220) avec une bielle (20, 22) et, vers l'arrière, le dit troisième moyen de liaison en attente (155-135, 157-137) avec la ferrure (12).

3. Suspension selon la revendication 2 dont l'extrémité arrière de chaque bielle (20, 22) comporte une chape (200, 220) coopérant avec la patte (155, 157) par l'intermédiaire d'un axe de pivotement (202, 222) pour former le second moyen de liaison (200-155, 220-157).

4. Suspension selon la revendication 2 dont la ferrure comporte une chape latérale (135, 137) coopérant avec la patte latérale (155, 157) du palonnier par l'intermédiaire d'un axe de pivotement (136, 138) monté avec jeu (E1, E2) pour former le troisième moyen de liaison.

5. Suspension selon la revendication 1 dont le palonnier (15') comporte de part et d'autre du premier moyen de liaison (150-130), une chape latérale (155', 157') avec un second moyen de liaison (155'-200', 157'-220') avec une bielle (20', 22'), et un troisième moyen de liaison (155'-135', 157'-137'), en attente, avec la ferrure.

6. Suspension selon la revendication 5 dont l'extrémité arrière de chaque bielle (20', 22') comporte une patte de fixation (200', 220') coopérant avec la chape latérale (155', 157') du palonnier (15') par l'intermédiaire d'un axe de pivotement (202, 222) pour former le second moyen de liaison.

7. Suspension selon la revendication 5 dont la ferrure comporte une patte de fixation latérale (135', 137') coopérant avec la chape latérale (155', 157') du palonnier par l'intermédiaire d'un axe de pivotement (136', 138') monté avec jeu pour former le troisième moyen de liaison.

## Patentansprüche

1. Aufhängung eines Turbomotors an einem Flugzeugmast mit einer zur Befestigung am Mast vorgesehenen Armatur (12), einer Traverse (15; 15'), deren mittlerer Teil (150; 150') mit einem ersten Verbindungsmittel (150-130) an der Armatur befestigt ist mit einer Schwenkachse (136; 136') und zwei Schubaufnahmestangen (20, 22; 20', 22'), die jeweils über ein zweites Verbindungsmittel (200-155, 220-157; 200'-155'; 220'-157') mit der Rückseite der Traverse verbunden sind, und mit am vorderen Ende Befestigungsmitteln am Motor, wobei die Traverse (15, 15') zwei dritte seitliche, wartende Verbindungsmittel (155-135, 157-137; 155' -135' , 157-137') mit der Armatur (12; 12') aufweist, **dadurch gekennzeichnet, dass** das erste Verbindungsmittel (150-130) aus zwei parallelen, von einander beabstandeten Schenkeln (151, 153) am mittleren Teil (150) der Traverse besteht, die mit einer Befestigungslasche (130) zusammenwirken, die über eine Schwenkachse fest mit der Armatur verbunden ist.

2. Aufhängung nach Anspruch 1, bei der die Traverse (15) auf beiden Seiten des ersten Verbindungsmittels eine seitliche Lasche (155, 157) aufweist, um nach vorne das zweite Verbindungsmittel (155-200, 157-200) mit einer Stange (20, 22) und nach hinten das dritte, wartende Verbindungsmittel (155-135, 157-137) mit der Armatur (12) zu stützen.

3. Aufhängung nach Anspruch 2, bei der das hintere Ende jeder Stange (20, 22) eine Gabel (200, 220) aufweist, die über eine Schwenkachse (202, 222) mit der Lasche (155, 157) zusammenwirkt, um das zweite Verbindungsmittel (200-155, 220-157) zu bilden.

4. Aufhängung nach Anspruch 2, bei der die Armatur eine seitliche Gabel (135, 137) aufweist, die mit der seitlichen Lasche der Traverse über eine mit Spiel (E1, E2) montierte Schwenkachse (136, 138) zusammenwirkt, um das dritte Verbindungsmittel zu bilden.

5. Aufhängung nach Anspruch 1, bei der die Traverse (15') auf beiden Seiten des ersten Verbindungsmittels (150-130) eine seitliche Gabel (155', 157') mit einem zweiten Verbindungsmittel (155'-200', 157'-220') mit einer Stange (20', 22') und einem dritten, wartenden Verbindungsmittel (155'-135', 157'-137') mit der Armatur aufweist.

6. Aufhängung nach Anspruch 5, bei der das hintere Ende jeder Stange (20', 22') eine Befestigungslasche (200', 220') aufweist, die über eine Schwenkachse (202, 222) mit der seitlichen Gabel (155', 157') der Traverse (15') zusammenwirkt, um das zweite Verbindungsmittel zu bilden.

7. Aufhängung nach Anspruch 5, bei der die Armatur eine seitliche Befestigungslasche (135', 137') aufweist, die über eine mit Spiel montierte Schwenkachse (136', 138') mit der seitlichen Gabel (155', 157') der Traverse zusammenwirkt, um das dritte Verbindungsmittel zu bilden.

## Claims

1. Turbine engine mount to the pylon of an aircraft comprising a bracket (12) arranged to be attached to the pylon, a lever (15; 15') attached in its central part (150; 150') to the bracket via first connection means (150-130) with a pivot pin (136; 136') and two thrust links (20, 22; 20', 22') each joined aft to the lever by second connection means (200-155, 220-157; 200'-155'; 220'-157') and forwardly comprising means for attachment to the engine, the lever (15, 15') comprising two third side connection means on standby (155-135, 157-137; 155'-135', 157'-137') with the bracket (12; 12'), **characterized in that** the first connection means (150-130) consist of two parallel arms (151, 153) spaced apart on the central part (150) of the lever, cooperating with an attachment lug (130) integral with the bracket via a pivot pin.

2. Mount as in claim 1 whose lever (15), either side of the first connection means, comprises a side lug (155, 157) to support forwardly said second connection means (155-200, 15-7-220) with a thrust link (20,22), and aft said third connection means on standby (155-135, 157-137) with the bracket (12).

3. Mount as in claim 2 whose aft end of each thrust link (20, 22) comprises a clevis (200, 220) cooperating with the lug (155, 157) via a pivot pin (202, 222) to form the second connection means (200-155, 220-157).

4. Mount as in claim 2 whose bracket comprises a lateral clevis (135, 137) cooperating with the side lug (155, 157) of the lever via a pivot pin (136, 138) mounted with clearance (E1, E2) to form the third connection means.

5. Mount as in claim 1 whose lever (15'), either side of the first connection means (150-130), comprises a lateral clevis (155', 157') with second connection means (155'-200', 157'-220') with a thrust link (20', 22'), and third connection means (155'-135', 157'-137') on standby with the bracket.

6. Mount as in claim 5 whose aft end of each thrust link (20', 22') comprises an attachment lug (200', 220') cooperating with the lateral clevis (155', 157') of the lever (15') via a pivot pin (202, 222) to form the second connection means.

7. Mount as in claim 5 whose bracket comprises a side attachment lug (135', 137') cooperating with the lateral clevis (155', 157') of the lever via a pivot pin (136', 138') mounted with clearance to form the third connection means.
